# EUROPÄISCHE PATENTSCHRIFT

(11) **EP 1 391 404 B1**
(45) Veröffentlichungstag und Bekanntmachung des Hinweises auf die Patenterteilung: **16.05.2007**
(21) Anmeldenummer: 03018816.3
(22) Anmeldetag: 19.08.2003
(51) Int. Cl.: B65G 47/91, B25J 15/06, B66C 1/02, B65G 49/06

(54) **Greifvorrichtung mit einem Überzug**
Gripping device with a covering
Dispositif de préhension avec revêtement

(30) Priorität: 22.08.2002 DE 20212927 U
(43) Veröffentlichungstag der Anmeldung: 25.02.2004
(73) Patentinhaber: EURO-TECH Vakuum-, Hebe- und Transporttechnik, 72348 Rosenfeld (DE)
(72) Erfinder: Bunnenberg, Peter, 72348 Rosenfeld (DE)
(74) Vertreter: Möbus, Daniela

(56) Entgegenhaltungen:
- EP-A- 0 216 701
- DE-B- 1 276 310
- DE-B- 1 286 466
- DE-U- 20 212 927
- US-A- 3 152 828

## Beschreibung

Die Erfindung betrifft eine Greifvorrichtung mit einem Überzug für Gegenstände mit empfindlichen Oberflächen, insbesondere für Glasplatten.

Greifvorrichtungen werden in verschiedensten Formen in unterschiedlichsten Industriezweigen, z. B. in der Glas-, Möbelplatten-, Flugzeug-, Kraftfahrzeug- und Elektroindustrie zur Handhabung empfindlicher Gegenstände eingesetzt. Insbesondere finden in den Hebe- und Transportanlagen der Glasindustrie Greifvorrichtungen in Gestalt von Saugplatten verschiedenster Formen und Ausführungen ihre Verwendung. Es muss dabei sichergestellt werden, dass die Saugvorrichtungen die Glasplatten in keiner Weise beschädigen. Eine Beschädigung kann beispielsweise dadurch eintreten, dass zwischen der Greifvorrichtung und der Glasplatte vorhandene Staub- oder Schmutzteilchen bei einer Bewegung der Sauger auf der Glasplatte Kratzer verursachen. Ferner kann die Glasoberfläche beim Saugen verschmutzt werden, und die Verschmutzung kann gegebenenfalls mit der Glasoberfläche eine chemische Reaktion auslösen. Dies ist insbesondere bei mit speziellen Beschichtungen versehenen Gläsern ein nicht zu unterschätzendes Problem. Die Wahrscheinlichkeit einer Beschädigung oder Verschmutzung nimmt beim Verschleiß der Dichtungen der Saugvorrichtungen beträchtlich zu. Es sind zwar Saugplatten mit abnehmbaren Dichtungen entwickelt worden, welche bei Verschleiß schnell und kostengünstig gewechselt werden können, doch lässt sich auch dadurch die Problematik der möglichen Beschädigung der Glasoberfläche nicht ausräumen.

Aus der DE 1 276 310 ist ein Sauggreifer für eine Einrichtung zum Greifen und Tragen von Werkstücken oder dergleichen mit hochempfindlichen Oberflächen bekannt geworden, wobei der Sauggreifer an seiner durch eine Dichtung begrenzten Saugfläche mit einem luftdurchlässigen Überzug aus einem Werkstoff wie beispielsweise Textilgewebe, Filz oder Fliespapier versehen ist. Der Überzug erstreckt sich über die gesamte Saugfläche einschließlich Dichtung hinaus bis zu der Umfangsfläche des Sauggreifers, wo er über einen separaten Gummiring festgelegt ist.

Aus der EP 0 216 701 ist es bekannt, eine Glasplatte anzusaugen, wobei der Sauger durch ein Gewebe abgedeckt ist, das möglicherweise aus feuerfesten Fasern besteht.

Der Erfindung liegt die Aufgabe zugrunde, auf kostengünstige Weise eine Möglichkeit zur Abhilfe dieser Probleme bei Greifvorrichtungen für Gegenstände mit empfindlichen Oberflächen, insbesondere für Glasplatten zu schaffen.

Die gestellte Aufgabe wird erfindungsgemäß gelöst durch eine Greifvorrichtung mit den Merkmalen des Anspruchs 1.

Der Überzug der Greifvorrichtung verhindert den direkten Kontakt zwischen dem Material der Greifvorrichtung und dem Gegenstand, beispielsweise einer Glasplatte. Das flexible Material mit der samtigen Oberfläche reduziert die lokale, punktförmige Druck- bzw. Kraftwirkung möglicherweise vorhandener harter Staubteilchen auf der Glasoberfläche, sodass die Wahrscheinlichkeit von Kratzerbildungen minimal ist. Der Überzug reduziert außerdem die Möglichkeit einer Verschmutzung der Oberfläche des Gegenstandes durch die Greifvorrichtung, welche zur Handhabung von Glasplatten oder ähnlichen Gegenständen vorteilhafterweise eine Saugplatte sein kann.

Damit der Überzug leicht und mühelos an der Greifvorrichtung angebracht werden kann, ist es zweckmäßig, den Überzug mit einem Gummizug zu versehen.

Bei Saugplatten als Greifvorrichtungen kann der Überzug zweckmäßigerweise luftdurchlässig sein, um die Saugwirkung der Greifvorrichtung nicht zu beeinträchtigen. Das Material des Überzugs kann dazu mit Poren versehen sein. Selbstverständlich ist es aber auch möglich, aus dem Material Belüftungsöffnungen auszustanzen.

Die Flexibilität und die samtige Weichheit des Materials für den Überzug wird in besonderer Weise durch ein textiles Material gewährleistet. Daher kann der Überzug vorzugsweise aus einem textilen Material wie einem Gewebe, Gewirk oder Gestrick gefertigt sein. Aber auch die Verwendung eines Folienmaterials für den Überzug ist möglich.

Damit nicht der Überzug selbst Ursache einer Verschmutzung wird, kann das Material für den Überzug vorteilhafterweise flusenfrei sein.

Das unter dem Markennamen Tyvek bekannte Kunststoffmaterial zeichnet sich durch seine Reiß-, Abrieb- und Biegerissfestigkeit sowie exzellente Fusseleigenschaften und Resistenz gegen Chemikalien aus. Der Überzug ist daher aus Tyvek hergestellt.

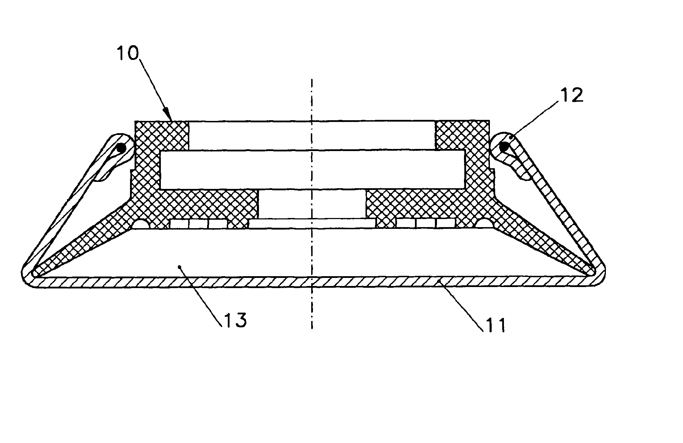

Nachfolgend wird ein bevorzugtes Ausführungsbeispiel anhand der Zeichnung näher erläutert.

Die einzige Figur zeigt einen Querschnitt durch eine Saugplattendichtung 10 einer nicht näher dargestellten Greifvorrichtung für Glasplatten. Die Dichtung 10 ist mit einem erfindungsgemäßen Schutzüberzug 11 versehen, der mindestens im Bereich der Dichtungsöffnung 13 mit Luftdurchlassöffnungen beispielsweise in Form von Poren und/oder Löchern versehen ist. Der Überzug 11 wird mittels eines Gummibandes 12 an der Dichtung 10 gehalten.

## Patentansprüche

1. Greifvorrichtung mit einem Überzug für Gegenstände mit empfindlichen Oberflächen, insbesondere für Glasplatten, wobei der Überzug aus einem flexiblen Material mit samtiger Oberfläche gefertigt ist, und wobei er aus einem unter dem Namen "Tyvek" bekannten Material hergestellt ist.

2. Greifvorrichtung nach Anspruch 1, **dadurch gekennzeichnet, dass** die Greifvorrichtung eine Saugplatte (10) ist.

3. Greifvorrichtung nach Anspruch 1 oder 2, **dadurch gekennzeichnet, dass** der Überzug mit einem Gummizug (12) versehen ist.

4. Greifvorrichtung nach Anspruch 1 bis 3, **dadurch gekennzeichnet, dass** der Überzug luftundurchlässig ist.

5. Greifvorrichtung nach Anspruch 1 bis 4, **dadurch gekennzeichnet, dass** der Überzug aus einem textilen Material gefertigt ist.

6. Greifvorrichtung nach Anspruch 1 bis 5, **dadurch gekennzeichnet, dass** der Überzug aus einem Gewebe, Gewirk, Gestrick oder aus einer Folie gefertigt ist.

7. Greifvorrichtung nach Anspruch 1 bis 6, **dadurch gekennzeichnet, dass** das Material des Überzugs flusenfrei ist.

8. Verwendung eines Überzugs, der aus einem unter dem Markennamen "Tyvek" bekannten Material mit samtiger Oberfläche hergestellt ist, bei einer Greifvorrichtung für Gegenstände mit empfindlichen Oberflächen.

## Claims

1. Gripping device having a covering, for objects with delicate surfaces, more particularly panes of glass, the covering being produced from a flexible material with a velvety surface and being made of a material known by the name "Tyvek".

2. Gripping device according to claim 1, **characterised in that** the gripping device is a suction plate (10).

3. Gripping device according to claim 1 or 2, **characterised in that** the covering is provided with a rubber coating (12).

4. Gripping device according to claims 1 to 3, **characterised in that** the covering is impermeable to air.

5. Gripping device according to claims 1 to 4, **characterised in that** the covering is produced from a textile material.

6. Gripping device according to claims 1 to 5, **characterised in that** the covering is produced from a woven or knitted fabric, or from a sheet material.

7. Gripping device according to claims 1 to 6, **characterised in that** the material of the covering is free from fluff.

8. Use of a covering made from a material having a velvety surface, and known by the trade name "Tyvek", with a gripping device for objects with delicate surfaces.

## Revendications

1. Dispositif de préhension avec un revêtement pour objets présentant des surfaces fragiles, en particulier pour plaques de verre, le revêtement étant fabriqué dans un matériau flexible à surface veloutée, et étant réalisé dans un matériau connu sous le nom de "Tyvek".

2. Dispositif de préhension selon la revendication 1, **caractérisé en ce que** le dispositif de préhension est une plaque à ventouse (10).

3. Dispositif de préhension selon la revendication 1 ou 2, **caractérisé en ce que** le revêtement est pourvu d'une tirette en caoutchouc (12).

4. Dispositif de préhension selon les revendications 1 à 3, **caractérisé en ce que** le revêtement est imperméable à l'air.

5. Dispositif de préhension selon les revendications 1 à 4, **caractérisé en ce que** le revêtement est fabriqué dans un matériau textile.

6. Dispositif de préhension selon les revendications 1 à 5, **caractérisé en ce que** le revêtement est fabriqué dans un tissu, un tricot à mailles ou dans une feuille.

7. Dispositif de préhension selon les revendications 1 à 6, **caractérisé en ce que** le matériau du revêtement est sans peluches.

8. Utilisation d'un revêtement qui est fabriqué dans un matériau connu sous le nom de marque "Tyvek" à surface veloutée, dans un dispositif de préhension pour objets présentant des surfaces fragiles.
